(19)

Europäisches
Patentamt
European
Patent Office
Office européen
des brevets

(11) **EP 2 902 985 A1**

(12) **EUROPEAN PATENT APPLICATION**
published in accordance with Art. 153(4) EPC

(43) Date of publication:
 **05.08.2015 Bulletin 2015/32**

(51) Int Cl.:
 **G08G 1/09** *(2006.01)*  **B60R 21/00** *(2006.01)*
 **G08G 1/16** *(2006.01)*

(21) Application number: **13841795.1**

(22) Date of filing: **20.09.2013**

(86) International application number:
 **PCT/JP2013/005567**

(87) International publication number:
 **WO 2014/050048 (03.04.2014 Gazette 2014/14)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**

(30) Priority: **27.09.2012 JP 2012215089**

(71) Applicant: **Panasonic Intellectual Property
 Management Co., Ltd.
 Osaka-shi, Osaka 540-6207 (JP)**

(72) Inventor: **GOTO, Shoji
 Osaka 540-6207 (JP)**

(74) Representative: **Grünecker Patent- und
 Rechtsanwälte
 PartG mbB
 Leopoldstraße 4
 80802 München (DE)**

(54) **RECEIVING DEVICE**

(57)     A receiving apparatus (14) receives from another terminal apparatus a packet signal, which contains the positional information and the mobile information. A terminal identifying unit (82) identifies a second terminal apparatus installed in a second vehicle in front of a first terminal apparatus installed in a first vehicle in front of the receiving apparatus, based on the positional information and the mobile information contained in the packet signal received. A warning unit (84) processes the packet signals sent from the second terminal apparatus and outputs their processing results.

FIG.7

EP 2 902 985 A1

## Description

TECHNICAL FIELD

The present invention relates to a communication technology, and it particularly relates to a receiving apparatus for receiving signal containing predetermined information.

BACKGROUND TECHNOLOGY

In order to reduce the driver's burden, a drive support apparatus, which provides various kinds of supports to vehicle drivers, are being developed. Suppose, for example, that driver's own vehicle is entering an intersection. Then, a possibility of collisions with another vehicle traveling on a road intersecting with the intersection or traveling on an oncoming traffic lane is informed to the driver through display or sound; or the position of the other vehicle is displayed on a display (see Reference (1) in the following Patent Documents, for instance).

RELATED ART DOCUMENTS

PATENT DOCUMENTS

> [Patent Document 1] Japanese Unexamined Patent Application Publication No. 2009-252092.
> [Patent Document 2] Japanese Unexamined Patent Application Publication No. 2009-276991.

DISCLOSURE OF THE INVENTION

PROBLEMS TO BE SOLVED BY THE INVENTION

When the driver's view is being blocked by a vehicle-in-front, which travels immediately in front of the driver's own vehicle, and when, in this situation, the traveling condition of a vehicle ahead of this vehicle-in-front is changed, there is a risk of being late for recognizing the change of the traveling condition. Here, the change of the traveling condition includes, a decrease in traveling speed and a lane change, for instance.

The present invention has been made in view of the foregoing circumstances, and a purpose thereof is to provide a technology for giving a proper notification to enhance the safety of a driver even when the field of view in front of the driver's own vehicle is deteriorated by another vehicle.

MEANS FOR SOLVING THE PROBLEMS

In order to resolve the above-described problems, a receiving apparatus according to one embodiment of the present invention includes: a receiving unit that receives a packet signal sent from a transmitting apparatus, the packet signal containing positional information and mobile information; a processing unit that processes a packet signal sent from a second transmitting apparatus installed in a second vehicle in front of a first transmitting apparatus installed in a first vehicle in front of the receiving apparatus, based on the positional information and the mobile information contained in the packet signal received by the receiving unit; and an output unit that outputs a processing result in the processing unit.

Optional combinations of the aforementioned constituting elements, and implementations of the invention in the form of methods, apparatuses, systems, recording media, computer programs and so forth may also be practiced as additional modes of the present invention.

EFFECT OF THE INVENTION

The present invention can give a proper notification to enhance the safety of a driver even when the field of view in front of the driver's own vehicle is deteriorated by another vehicle.

BRIEF DESCRIPTION OF THE DRAWINGS

> FIG. 1 shows a structure of a communication system according to a first exemplary embodiment of the present invention;
> FIG. 2 shows a structure of a base station apparatus shown in FIG. 1;
> FIGS. 3A to 3D each shows a format of frame specified in the communication system of FIG.1;
> FIG. 4 shows a structure of a terminal apparatus installed in a vehicle shown in FIG. 1;
> FIG. 5 shows a data structure of data stored in a packet signal used in a terminal apparatus shown in FIG. 4;
> FIG. 6 shows a data structure of vehicle type information shown in FIG. 5;
> FIG. 7 shows a structure of an application executing unit shown in FIG. 4;
> FIG. 8 shows a brief summary of a processing carried out by a terminal identifying unit shown in FIG. 7;
> FIG. 9 shows a screen displayed on a notification unit shown in FIG. 4;
> FIG. 10 shows another screen displayed on a notification unit shown in FIG. 4;
> FIGS. 11A and 11B show still another screen displayed on a notification unit shown in FIG. 4;
> FIG. 12 is a flowchart showing a notification procedure by the terminal apparatus of FIG. 4;
> FIG. 13 shows a structure of an application executing unit according to a second exemplary embodiment of the present invention;
> FIG. 14 is a flowchart showing a notification procedure by the application executing unit of FIG. 13;
FIG. 15 is a brief summary of a processing carried out in a warning unit according to a third exemplary embodiment of the present invention; and
FIGS. 16A to 16C each shows a data structure of a table recorded in a warning unit according to a third exemplary embodiment of the present invention.

MODES FOR CARRYING OUT THE INVENTION

(First Exemplary Embodiment)

The inventor's knowledge underlying the present invention will be explained before the first exemplary embodiment of the present invention is explained in detail. The first exemplary embodiment of the present invention relates to a communication system that carries out not only a vehicle-to-vehicle (inter-vehicle) communication between terminal apparatuses installed in vehicles but also a road-to-vehicle communication from a base station apparatus installed in an intersection or the like to terminal apparatuses. Such a communication system is called ITS (Intelligent Transport Systems) also. ITS is regulated by the standard for 700 MHz band ITS (Association of Radio Industries and Businesses), for instance. Similar to wireless LANs (Local Area Networks) compliant with standards such as IEEE 802.11 or the like, the communication system uses an access control function called CSMA/CA (Carrier Sense Multiple Access with Collision Avoidance). In ITS, information needs to be transmitted to a large indefinite number of terminal apparatuses. In order to efficiently transmit the information thereto, the communication system transmits packet signals by broadcast.

In other words, as the inter-vehicle communication, a terminal apparatus transmits by broadcasting a packet signal in which the information such as the traveling speed and position of a vehicle are stored. Also, other terminal apparatuses receive the packet signals and recognize the approach of the vehicle or the like based on the aforementioned information. In order to reduce the interference between the inter-vehicle communication and the road-to-vehicle communication, the base station apparatus repeatedly specifies a frame that contains a plurality of subframes. To perform the road-to-vehicle communication, the base station apparatus selects any of a plurality of subframes and transmits by broadcasting a packet signal that contains control information and the like, in a period of a beginning part of the selected subframe.

The control information contains information regarding a time length required for the transmission of the packet signal by broadcasting from the base station apparatus (hereinafter this time length will be referred to as "road-to-vehicle transmission period"). The terminal apparatus identifies the road-to-vehicle period based on the control information, and transmits by broadcasting packet signals in a period other than the road-to-vehicle transmission period (hereinafter this period will be referred to as "inter-vehicle transmission period") using a CSMA scheme. As a result, the road-to-vehicle communication and the inter-vehicle communication are subjected to time-division multiplexing. Note that terminal apparatuses, which are located outside an area formed around the base station apparatus, transmit the packet signals, using the CSMA scheme, regardless of the frame construction.

An outline of the present exemplary embodiment is first given. The terminal apparatus notifies the approach of a vehicle and the like to a driver. If, however, such notification is transmitted to all vehicles, the number of notifications will increase. As the number of notifications increases, the driver gets used to being informed of such notifications and therefore the ability of drawing attention gets weaker. For this reason, it is suitable that attention is focused on a vehicle, which is at high risk, and the information regarding this vehicle is notified. At the same time, the driver checks not only the traveling condition of a vehicle traveling immediately in front of driver's own vehicle (hereinafter referred to as "vehicle-in-front" also) but also the traveling condition of a vehicle traveling in front of the vehicle-in-front (hereinafter referred to as "vehicle ahead of the vehicle-in-front" also). In this manner, the driver keeps safer driving by predicting a potential danger.

As the frontward view is deteriorated by the presence of a vehicle-in-front, it gets harder to check the traveling condition of a vehicle ahead of the vehicle-in-front. As a result, it gets harder for the driver to predict a potential danger caused by a stop or lane change of the vehicle ahead of the vehicle-in-front. In order to cope with this, the terminal apparatus selects a packet signal sent from another terminal apparatus installed in the vehicle ahead of the vehicle-in-front, based on packet signals received from other terminal apparatuses. The terminal apparatus notifies the information, which is contained in the selected packet signal, to the driver. Here, the information corresponds to traveling conditions such as a brake, a turn signal status, traveling speed, position and so forth. In other words, the traveling condition of the vehicle ahead of the vehicle-in-front is notified to the driver while the vehicle is moving.

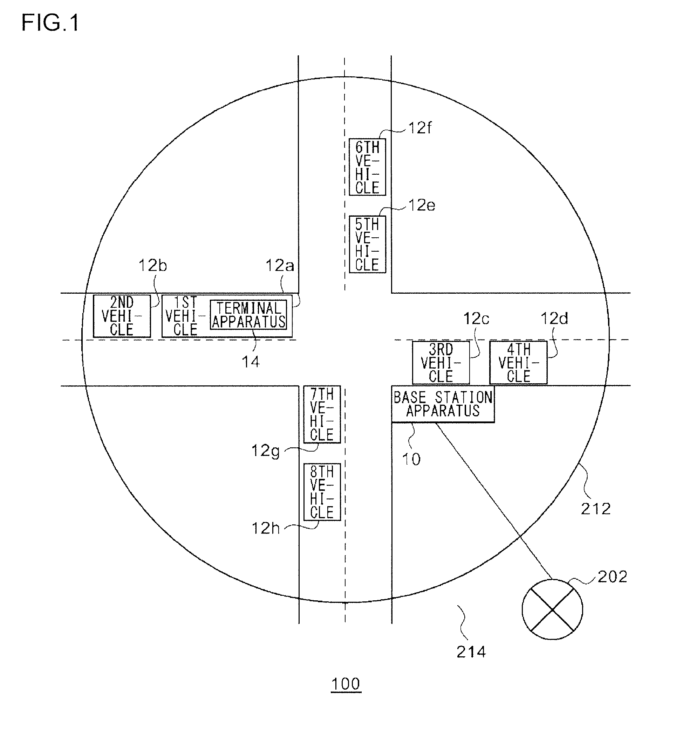

FIG. 1 shows a structure of a communication system 100 according to the first exemplary embodiment of the present invention. FIG. 1 corresponds to a case where an intersection is viewed from above. The communication system 100 includes a base station apparatus 10, a first vehicle 12a, a second vehicle 12b, a third vehicle 12c, a fourth vehicle 12d, a fifth vehicle 12e, a sixth vehicle 12f, a seventh vehicle 12g, and an eighth vehicle 12h, which are generically referred to as "vehicle 12" or "vehicles 12", and a network 202. Although only the first vehicle 12a is shown here, the terminal apparatus 14 is installed in each vehicle 12. An area 212 is formed around the base station apparatus 10, and an outside area 214 is formed outside the area 212.

As shown in FIG. 1, a road extending in the horizontal, or left-right, direction and a road extending in the vertical, or up-down, direction in FIG. 1 intersect with each other in the central portion thereof. Note here that the upper side of FIG. 1 corresponds to the north, the left side thereof the west, the down side thereof the south, and the right side thereof the east. And the portion where the two roads intersect each other is the "intersection". The first vehicle 12a and the second vehicle 12b are advancing from left to right, while the third vehicle 12c and the fourth vehicle 12d are advancing from right to left. Also, the fifth vehicle 12e and the sixth vehicle 12f are advancing downward, while the seventh vehicle 12g and the eighth vehicle 12h are advancing upward.

In the communication system 100, the base station apparatus 10 is secured to and installed at the intersection. The base station apparatus 10 controls communications between the terminal apparatuses. The base station apparatus 10 repeatedly generates a frame containing a plurality of subframes, based on the signal received from not-shown GPS (Global Positioning System) satellites and frames formed by the other base station apparatuses 10 (not-shown). Here, a definition is made such that the road-to-vehicle transmission period can be set to the leading part (beginning part) of each subframe.

The base station apparatus 10 selects a subframe, in which the road-to-vehicle transmission period is not set by the other base station apparatuses 10, from among a plurality of subframes. The base station apparatus 10 sets the road-to-vehicle transmission period to the beginning part of the selected subframe. The base station apparatus 10 broadcasts the packet signal in the thus set road-to-vehicle transmission period. In the road-to-vehicle transmission period, there may be cases where a plurality of packet signals are broadcast. The packet signal contains traffic accident information, traffic congestion information, traffic signal information and so forth, for instance. The packet signal also contains the information concerning the timing with which the road-to-vehicle transmission period has been set and the control information concerning frames.

As described earlier, a terminal apparatus 14 is installed in a vehicle 12 and is movable from one location to another. Also, the terminal apparatus 14 can be carried by a pedestrian. As the terminal apparatus 14 receives a packet signal from the base station apparatus 10, the terminal apparatus 14 estimates that the vehicle 12 is located in the area 212. If a vehicle 12 carrying a terminal apparatus 14 is located in the area 212, this terminal apparatus 14 produces a frame based on the control information, contained in the packet signal, which is particularly the information concerning the timing, with which the road-to-vehicle transmission period has been set, and the information concerning frames. As a result, frames generated respectively by a plurality of terminal apparatuses 14 are synchronized with a frame generated by the base station apparatus 10. The terminal apparatus 14 broadcasts the packet signal in the inter-vehicle transmission period, which is a period different from the road-to-vehicle transmission period. In so doing, CSMA/CA is carried out in this inter-vehicle transmission period. If, on the other hand, it is estimated that the vehicle 12 carrying the terminal apparatus 14 is located in the outside area 214, the terminal apparatus 14 will carry out CSMA/CA regardless of the frame construction and thereby broadcast the packet signals.

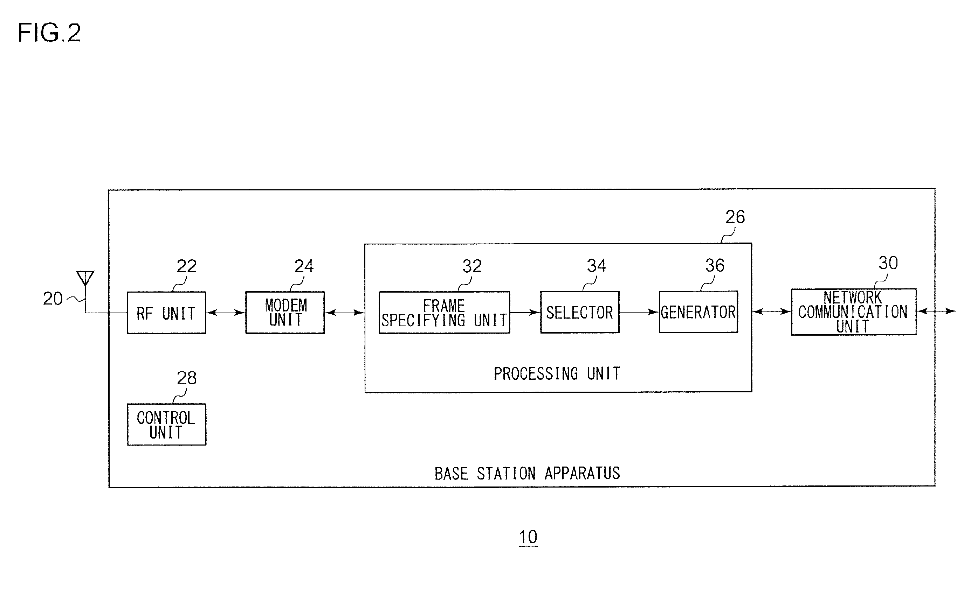

FIG. 2 shows a structure of the base station apparatus 10. The base station apparatus 10 includes an antenna 20, an RF unit 22, a modem unit 24, a processing unit 26, a control unit 28, and a network communication unit 30. The processing unit 26 includes a frame specifying unit 32, a selector 34, and a generator 36.

As a receiving processing, the RF unit 22 receives, through the antenna 20, packet signals transmitted from not-shown terminal apparatuses 14 and the other base station apparatuses 10 (not shown). The RF unit 22 performs a frequency conversion on the received packet signal of a radiofrequency and thereby generates a packet signal of baseband. Further, the RF unit 22 outputs the baseband packet signal to the modem unit 24. Generally, a baseband packet signal is formed of an in-phase component and a quadrature component, and therefore the baseband packet signal is to be represented by two signal lines. However, the baseband packet signal is represented by a single signal line here to make the illustration clearer for understanding. The RF unit 22 also includes an LNA (Low Noise Amplifier), a mixer, an AGC (Automatic Gain Control) unit, and an A/D (Analog-to-Digital) converter.

As a transmission processing, the RF unit 22 performs a frequency conversion on the baseband packet signal inputted from the modem unit 24 and thereby generates a radiofrequency packet signal. Further, the RF unit 22 transmits, through the antenna 20, the radiofrequency packet signal in a road-to-vehicle transmission period. The RF unit 22 also includes a PA (Power Amplifier), a mixer, and a D/A (Digital-to-Analog) converter. For example, a 700 MHz band is used as a radio frequency.

As a receiving processing, the modem unit 24 demodulates the baseband packet signal fed from the RF unit 22. Further, the modem unit 24 outputs the demodulation result to the processing unit 26. As a transmission processing, the modem unit 24 modulates the data fed from the processing unit 26. Further, the modem unit 24 outputs the modulation result to the RF unit 22 as a baseband packet signal. It is to be noted here that the communication system 100 is compatible with an OFDM (Orthogonal Frequency Division Multiplexing) modulation scheme and therefore the modem unit 24 performs FFT (Fast Fourier Transform) as a receiving processing and performs IFFT (Inverse Fast Fourier Transform) as a transmission processing as well.

The frame specifying unit 32 receives signals from the not-shown GPS satellites and acquires information on the time of day based on the received signals. Note that known art can be used for the acquisition of information on the time of day and therefore the description thereof is omitted here. The frame specifying unit 32 generates a plurality of frames based on the information on the time of day. For example, the frame specifying unit 32 generates ten "100 msec" frames by dividing a duration of "1 sec" into 10 parts with reference to the timing indicated by the information on the time of day. Frames are thus defined and specified repeatedly through the repetition of this process. Note that the frame specifying unit 32 may detect the control information from the demodulation result and generate frames based on the detected control information. Such a processing as this corresponds to a process of generating a frame synchronized with the timing of the frames formed by the other base station apparatuses 10.

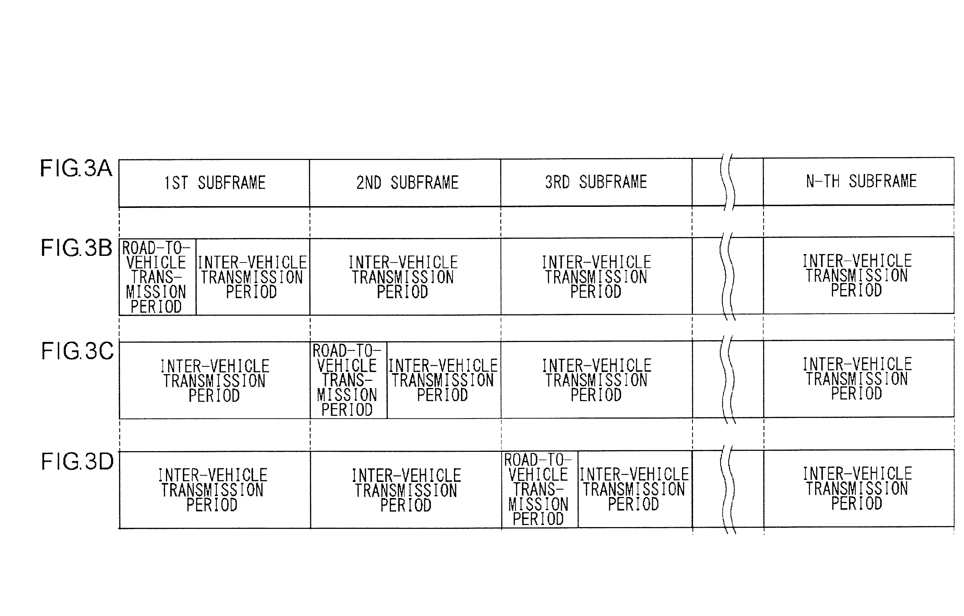

FIGS. 3A to 3D each shows a format of frame specified in the communication system 100. FIG. 3A shows a structure of a frame. Each frame is constructed of N subframes denoted by a first subframe to an N-th subframe. This may be interpreted as follows. That is, a frame is formed such that the terminal apparatus 14 time-multiplexes a subframe a plurality of times. Here, the subframe is a subframe usable during the broadcasting. For example, when each frame is 100 msec long and N is 8, the subframe of 12.5 msec in length (duration) is defined. Note that N may be other than 8. A description of FIGS. 3B to 3D will be given later. Now, refer back to FIG. 2.

The selector 34 selects a subframe, with which to set the road-to-vehicle transmission period, from among a plurality of subframes contained in a frame. More to the point, the selector 34 receives a frame defined by the frame specifying unit 32. Also, the selector 34 receives an instruction regarding the selected subframe via a not-shown interface. The selector 34 selects a subframe according to the instruction. Aside from this, the selector 34 may automatically select a subframe. At this time, the selector 34 receives the input of demodulation results from the not-shown other base station apparatuses 10 or the not-shown other terminal apparatuses 14 via the RF unit 22 and the modem unit 24. The selector 34 extracts the demodulation result sent from the other base station apparatuses 10 from among the demodulation results inputted. The selector 34 identifies a subframe, which does not receive the demodulation result, by identifying the subframe that has received the demodulation result.

This corresponds to identifying an unused subframe, namely, a subframe to which the road-to-vehicle transmission period is not set by the other base station apparatuses 10. If there are a plurality of unused subframes, the selector 34 will randomly select a single subframe. If there is no unused subframes, namely, if a plurality of subframes are all used respectively, the selector 34 will acquire the received power corresponding to the demodulation result and select preferentially a subframe whose received power is smaller.

FIG. 3B shows a structure of a frame generated by a not-shown first base station apparatus 10a. The first base station apparatus 10a sets a road-to-vehicle transmission period at the beginning of the first subframe. Subsequent to this road-to-vehicle transmission period, the first base station apparatus 10a sets an inter-vehicle transmission period in the first subframe. The inter-vehicle transmission period is a period during which a terminal apparatus 14 can broadcast a packet signal. In other words, the subframes are defined such that the first base station apparatus 10a can broadcast the packet signal in the road-to-vehicle transmission period assigned to the beginning of the first subframe and such that a terminal apparatus 14 can broadcast the packet signal in the inter-vehicle transmission period, which is a period other than the road-to-vehicle transmission period, in the first subframe. Further, the first base station apparatus 10a sets the inter-vehicle transmission periods only to the second to N-th subframes.

FIG. 3C shows a structure of a frame generated by a not-shown second base station apparatus 10b. The second base station apparatus 10b sets a road-to-vehicle transmission period at the beginning of the second subframe. Also, the second base station apparatus 10b sets an inter-vehicle transmission period to the subsequent remaining period of the second subframe, and sets the inter-vehicle transmission periods to the first subframe, the third to N-th subframes. FIG. 3D shows a structure of a frame generated by a not-shown third base station apparatus 10c. The third base station apparatus 10c sets a road-to-vehicle transmission period at the beginning of the third subframe. Also, the third base station apparatus 10c sets an inter-vehicle transmission period to the subsequent remaining period of the third subframe, and sets the inter-vehicle transmission periods to the first and second subframes and the fourth to N-th subframes. In this manner, a plurality of base station apparatuses 10 select mutually different subframes from each other and then set the road-to-vehicle transmission periods at their beginnings of the mutually different subframes selected, respectively. Now refer back to FIG. 2. The selector 34 outputs the selected subframe numbers to the generator 36.

The generator 36 receives the subframe numbers from the selector 34. The generator 36 sets the road-to-vehicle transmission periods to the subframes that correspond to the received subframe numbers, and generates packet signals to be broadcast in the road-to-vehicle transmission periods. If a plurality of packet signals are to be transmitted in one road-to-vehicle transmission period, the generator 36 will generate those packet signals. A packet signal is comprised of control information and a payload. The control information contains the subframes numbers where the road-to-vehicle transmission periods have been set. Also, the payload contains traffic accident information, traffic congestion information, traffic signal information, and so forth, for instance. These items of data are acquired from the not-shown network 202 by the network communication unit 30. The processing unit 26 has the modem unit 24 and RF unit 22 transmit the packet signal by broadcasting in the road-to-vehicle transmission periods. The control unit 28 controls the entire processing of the base station apparatuses 10.

These structural components may be implemented hardwarewise by elements such as a CPU, memory and other LSIs of an arbitrary computer, and softwarewise by memory-loaded programs or the like. Depicted herein are functional blocks implemented by cooperation of hardware and software. Therefore, it will be obvious to those skilled in the art that the functional blocks may be implemented by a variety of manners including hardware only, software only or a combination of both.

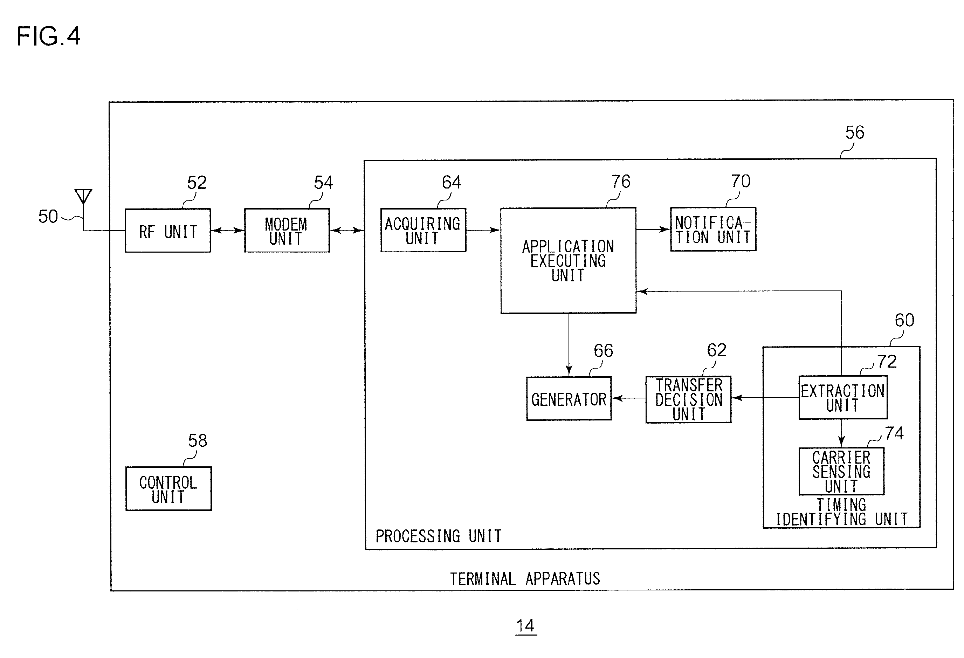

FIG. 4 shows a structure of a terminal apparatus 14 installed in a vehicle 12. The terminal apparatus 14 includes an antenna 50, an RF unit 52, a modem unit 54, a processing unit 56, and a control unit 58. The processing unit 56 includes a timing identifying unit 60, a transfer decision unit 62, an acquiring unit 64, a generator 66, a notification unit 70, and an application executing unit 76. The timing identifying unit 60 includes an extraction unit 72 and a carrier sensing unit 74. The antenna 50, the RF unit 52 and the modem unit 54 carry out the processings similar to those carried out by the antenna 20, the RF unit 22 and the modem unit 24 of FIG. 2, respectively. A description is given here centering around different features.

In a receiving processing, the modem unit 54 and the processing unit 56 receive a packet signal sent from not-shown another terminal apparatus 14 or the base station apparatus 10. As described earlier, the modem unit 54 and the processing unit 56 receive a packet signal sent from the base station apparatus 10 in a road-to-vehicle transmission period, and receive the packet signal sent from the other terminal apparatus 14 in an inter-vehicle transmission period.

If the demodulation result fed from the modem unit 54 relates to the packet signal sent from the not-shown base station apparatus 10, the extraction unit 52 will identify the timing of a subframe to which the road-to-vehicle transmission period has been placed. In this case, it is estimated that the extraction unit 72 of the terminal apparatus 14 is located within the area 212. The extraction unit 72 generates frames based on the timing of the subframe and the content of message header in the packet signal. As a result, the extraction unit 72 generates a frame synchronized with the frame formed by the base station apparatus 10. If the sender of the packet signal broadcast is another terminal apparatus 14, the extraction unit 72 will skip the process of generating the synchronized frame. If it is estimated that the terminal apparatus 14 is located in the area 212, the extraction unit 72 will first identify the road-to-vehicle transmission period in use and then identify the remaining inter-vehicle transmission period. The extraction unit 72 outputs the timings of frame and subframes and the information on the inter-vehicle transmission period to the carrier sensing unit 74.

If, on the other hand, the packet signal sent from the base station 10 is not being received, namely if the frame synchronized with the frame formed by the base station apparatus 10 is not being generated, it will be estimated that the extraction unit 52 of the terminal apparatus 14 is located in the outside area 214. If it is located in the outside area 214, the extraction unit 72 will select a timing independent of the frame construction and instruct the carrier sensing unit 74 to carry out carrier sensing independent of the frame construction.

The carrier sensing unit 74 receives from the extraction unit 72 the timings of frames and subframes and the information concerning the inter-vehicle transmission period. The carrier sensing unit 74 starts CSMA/CA within the inter-vehicle transmission period and thereby determines the transmission timing. This corresponds to setting NAV (Network Allocation Vector) for the road-to-vehicle transmission period and carrying out carrier sensing in a period during which no NAV is set. If, on the other hand, the carrier sensing unit 74 is instructed, from the extraction unit 72, to carry out carrier sensing independent of the frame construction, the carrier sensing unit 74 will carry out CSMA/CA without regard to the frame construction so as to determine the transmission timing. The carrier sensing unit 74 notifies the thus determined transmission timing to the modem unit 54 and the RF unit 52 and has them transmit the packet signal by broadcast.

The transfer decision unit 62 controls the transfer of the control information. The transfer decision unit 62 extracts information to be transferred, out of the control information. The transfer decision unit 62 generates information to be transferred, based on the extracted information. A description of such a processing as this is omitted here. The transfer decision unit 62 outputs the information to be transferred, namely part of the control information, to the generator 66. The generator 66 receives data from the application executing unit 76 and receives part of the control information from the transfer decision unit 62. The data received from the application executing unit 76 will be discussed later. The generator 66 stores part of the received control information in the control information and stores the data in the payload so as to generate packet signals. The processing unit 56, the modem unit 54, the RF unit 52 and the generator 66 sequentially broadcast a plurality of packet signals generated by the generator 66. The control unit 58 controls an operation of the terminal apparatus 14.

The acquiring unit 64 includes a GPS receiver, a gyroscope, a vehicle speed sensor, and so forth all of which are not shown. The acquiring unit 64 acquires the present position, traveling direction, traveling speed and so forth of the not-shown vehicle 12, namely the vehicle 12 in which the terminal apparatus 14 is installed, based on data supplied from the aforementioned not-shown components of the acquiring unit 64. (Hereinafter the present position, traveling direction, traveling speed and so forth thereof will be generically referred to as "positional information" or "position information".) The present position thereof is indicated by the latitude and longitude. Known art may be employed to acquire them and therefore the description thereof is omitted here. The GPS receiver, the gyroscope, the vehicle speed sensor and so forth may be provided outside the terminal apparatus 14. The acquiring unit 64 outputs the positional information to the application executing unit 76.

The application executing unit 76 is capable of executing a plurality of kinds of applications. Each application is executed by a plurality of terminal apparatuses 14. In other words, a transmitting-side terminal apparatus 14 generates data and broadcasts a packet signal in which the thus generated data is stored; a receiving-side terminal apparatus 14 receives the packet signal and carries out a predetermined processing, based on the data contained in the packet signal. Thus, each application is divided into a transmitting-side processing (hereinafter referred to as "transmitting-side application") and a receiving-side processing (hereinafter referred to as "receiving-side application"). Here, a transmitting-side application executed in one terminal apparatus 14 does not necessarily coincide with a receiving-side application in the same terminal apparatus 14. In the following, a transmitting-side application and a receiving-side application may each generically be referred to as an application.

A plurality of kinds of applications are classified as follows. A first category is a common application. The common application is an application used to alert the driver about the approach of other vehicles 12, and are executed by all terminal apparatuses 14. When a transmitting-side application in the common application is to be executed, the application executing unit 76 inputs the positional information fed from the acquiring unit 64. The application executing unit 76 periodically outputs the positional information to the generator 66.

At the same time, the application executing unit 76 acquires positional information, contained in the packet signals sent from other terminal apparatus 14, from the extraction unit 72, as a receiving-side application in the common application. The application executing unit 76 detects an approach of other vehicles 12, based on the positional information on the other terminal apparatuses 14 acquired from the extraction unit 72 and the positional information inputted from the acquiring unit 64. The application executing unit 76 notifies the approach of other vehicles 12 to the notification unit 70. The notification unit 70 notifies the approach thereof to the driver via a monitor and a speaker. A second category is a free (independent) application. The free application is executed by arbitrary terminal apparatuses 14 only, but not by the all terminal apparatuses 14. A plurality of free applications may be executed simultaneously.

Among a plurality of kinds of applications, the common application only is to be explained here. Note that hereinafter there are cases where a common application is simply referred to as an application. The description of the free application is omitted here. A description is now given of formats of data outputted from the application executing unit 76 to the generator 66 as well as formats of data inputted from the extraction unit 72 to the application executing unit 76. Such a format may be rephrased as a structure of data in the packet signals used in the terminal apparatus 14.

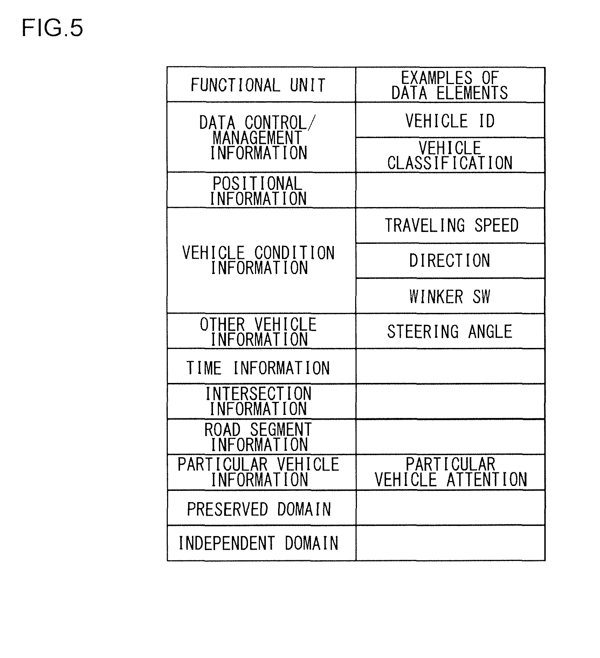

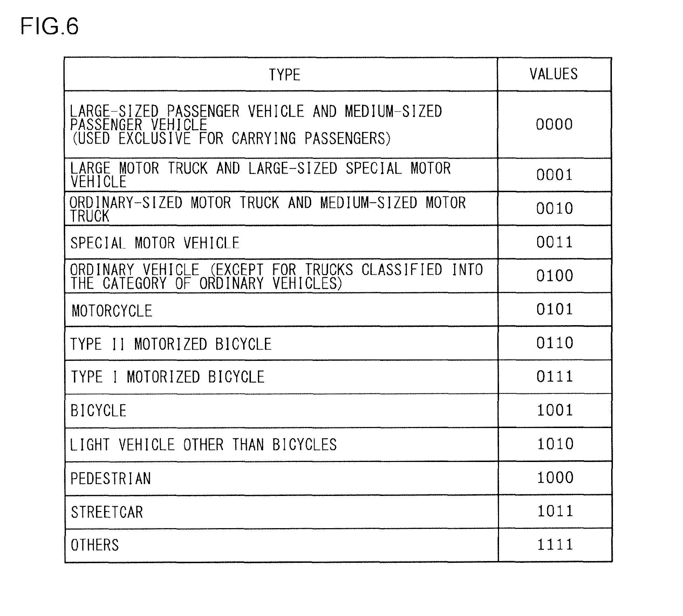

FIG. 5 shows a data structure of data stored in a packet signal used in a terminal apparatus 14. Data to be information-exchanged are listed as functional units. Exemplary data elements are listed following the explanation of per-function units. Note that these function units may be stored in a plurality of packet packets such that they are separately divided into the plurality of packet signals, instead of being contained in a single packet signal. A data control/management information unit is an item list that describes the management information (inter-vehicle, road-to-vehicle), the data version and the continuity of data. Examples of the data element contained in the data control/management unit are vehicle ID and vehicle classification (vehicle type). The vehicle ID is information temporarily set for each vehicle. The vehicle classification sets a type of the driver's own vehicle. FIG. 6 shows a data structure of vehicle classification information. The vehicle type is identified using 4 bits. For example, "large-sized passenger vehicle and medium-sized passenger vehicle (used exclusively for carrying passengers)" is indicated by a value "0000". Now refer back to FIG. 5.

A positional information unit is an item list that describes the positional information and the information on a delay in the positional information. This contains the positional information acquired by the acquiring unit 64. A vehicle condition information unit is an item list describing the dynamic (time-varying) vehicle information. The traveling speed sets the traveling speed of the driver's own vehicle. For example, the traveling speed is indicated in a range of 0 to 255 km in units of 1 km/hour. A direction (azimuth) is such that the north corresponds to 0 degrees as the traveling direction of the driver's own vehicle and such that the direction (azimuth) is expressed in a range of 0 to 359 degrees clockwise. A winker (turn signal) SW status sets a turn-signal switch status of the vehicle. For example, "indefinite" is indicated by "000". Similarly, "winker OFF" is indicated by "100", for instance. "Right ON" is indicated by "101", for instance. "Left ON" is indicated by "110", for instance. "No winker provided (pedestrians, etc.)" is indicated by "111", for instance.

An other vehicle information unit is an item list describing other vehicle information. For example, a steering angle is included. A time information unit is an item list describing the time information of a GPS or the like. An intersection information unit is an item list describing the information on a nearby intersection. A road segment information unit is an item list describing the information on the segmentation of a road that the vehicle is traveling. A particular vehicle information unit is an item list describing the information on an emergency motor vehicle and the like. A particular vehicle attention is set when a particular vehicle is active. For example, "normal state" is indicated by "0" while "active state" is indicated by "1". A preserved domain unit is an item list describing the information needed when the function is extended. An independent domain is an area available except for the common application. Data shown in FIG. 5 may preferably be acquired by the acquiring unit 64, for instance.

Summarizing the above, in the communication system 100, the base station apparatus 10 and the terminal apparatuses 14 communicate with each other in cycles of about 100 msec. In order to reduce the interference between the road-to-vehicle communication and the inter-vehicle communication, the road-to-vehicle communication and the inter-vehicle communication are time-division multiplexed. To ensure a road-to-vehicle transmission period, the base station apparatus 10 has the information on the transmission time and the road-to-vehicle communication period contained in a packet signal and then notifies this packet signal containing such the information to the surrounding terminal apparatuses. Each of the terminal apparatuses 14 located within the area 212 is time-synchronized based on the transmission time received from the base station apparatus 10, and suspends a certain transmission based on the inter-vehicle communication period information. Thereby, each thereof transmits the packet signal with timings other than the road-to-vehicle transmission periods, using the CSMA/CA scheme. A payload in the inter-vehicle communication is comprised of data for a common application and data for a free application.

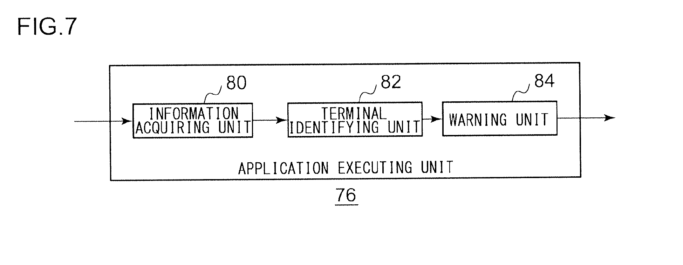

FIG. 7 shows a structure of the application executing unit 76. The application executing unit 76 includes an information acquiring unit 80, a terminal identifying unit 82, and a warning unit 84. This corresponds to a structure, in the application executing unit 76, which is responsible for the receiving processing of the data for the common application. As discussed earlier, the traveling condition of a vehicle ahead of the vehicle-in-front is notified to the driver.

The information acquiring unit 80 receives data from the extraction unit 72. The thus received data are contained in the packet signals transmitted from other terminal apparatuses 14. Accordingly, the data contain the information as shown in FIG. 5 and FIG. 6, which is, for example, the mobile information, such as the traveling speed and the azimuth, and the positional information. The data may contain brake information. The brake information is information indicating that a brake pedal of any of vehicles 12, where the other terminal apparatuses 14 are installed, has been stepped in. The information acquiring unit 80 outputs the data to the terminal identifying unit 82.

The terminal identifying unit 82 receives data, which are the positional information and the mobile information in particular, from the information acquiring unit 80. Also, the terminal identifying unit 82 receives, from the acquiring unit 64, the present position and the traveling direction of a driver's own vehicle 12 in which the terminal apparatus 14 is installed. Note here that the traveling direction thereof corresponds to the azimuth. Here, these are referred to as "the present position of the driver's own vehicle 12" and "the traveling direction of the driver's own vehicle 12" also. Based on these, the terminal identifying unit 82 identifies a vehicle 12 traveling in front of the driver's own vehicle 12, in which the terminal apparatus 14 is installed, namely another terminal apparatus 14 installed in the vehicle-in-front (hereinafter referred to as "terminal apparatus 14 of the vehicle-in-front" also). A description is given hereunder of a concrete processing for identifying the terminal apparatus 14 of the vehicle-in-front.

Using the positional information of the vehicle 12 as a starting point, the terminal identifying unit 82 identifies other terminal apparatuses 14, which are located within a certain range of area and which travel along the traveling direction of the driver's own vehicle 12. A certain range of area may be defined like a range of "-10 degrees" to "10 degrees" of the traveling direction, for instance. The terminal identifying unit 82 compares the traveling direction of the identified other terminal apparatuses 14 with the traveling direction of the driver's own vehicle 12. If those traveling directions are close to each other, the terminal identifying unit 82 will identify them in such a manner that both vehicles are traveling in the same direction of the driver's own vehicle 12. The case where the both vehicles 12 are close to each other corresponds to the case where the difference between their respective traveling directions is less than a threshold value. Further, the terminal identifying unit 82 identifies another terminal apparatus 14, which is identified to be traveling in the same direction and whose distance from the driver's own vehicle 12 is the minimum, as the terminal apparatus 14 of the vehicle-in-front.

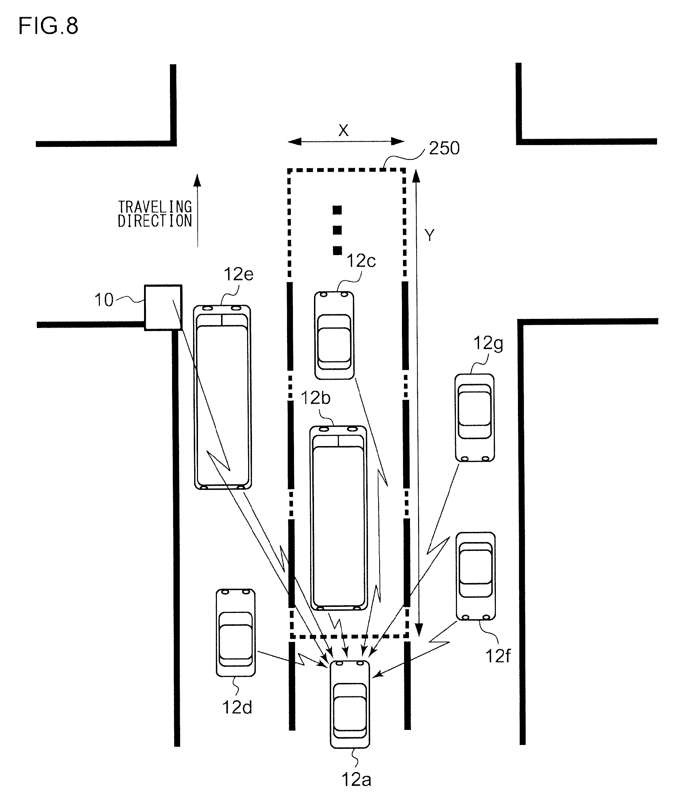

FIG. 8 shows a brief summary of a processing carried out by the terminal identifying unit 82. The case illustrated in FIG. 8 differs from the above-described one about the certain range of area. The first vehicle 12a corresponds to the driver's own vehicle 12. The first vehicle 12a travels in an upward direction in Fig. 8. The second vehicle 12b, the third vehicle 12c, the fourth vehicle 12d and the fifth vehicle 12e all travel in the upward direction, too. On the other hand, the sixth vehicle 12f and the seventh vehicle 12g travel in a downward direction. A terminal apparatus 14 installed in the first vehicle 12a defines a decision area 250 in the traveling direction. The decision area 250 corresponds to the aforementioned certain range of area. This terminal apparatus 14 identifies vehicles 12 existent in the decision area 250. In this case, the second vehicle 12b and the third vehicle 12c are identified. Of the second vehicle 12b and the third vehicle 12c identified, a terminal apparatus 14 installed in the second vehicle 12b corresponds to the terminal apparatus 14 of the vehicle-in-front. This is because the second vehicle 12b is located closer to the first vehicle 12a. Now refer back to FIG. 7.

The terminal identifying unit 82 identifies a terminal apparatus 14 ahead of the terminal apparatus 14 of the vehicle-in-front. In this case, the terminal identifying unit 82 identifies the terminal apparatus 14 existent immediately ahead of the terminal apparatus 14 of the vehicle-in-front. Hereinafter, this terminal apparatus 14 thus identified here will be referred to as "terminal apparatus 14 to be processed" or "to-be-processed terminal apparatus 14" also. This corresponds to identifying a terminal apparatus 14 whose distance from the driver's own vehicle 12 is the second smallest next to that of the terminal apparatus 14 of the vehicle-in-front. In FIG. 8, a terminal apparatus 14 installed in the third vehicle 12c corresponds to the terminal apparatus 14 to be processed. The terminal identifying unit 82 outputs to the warning unit 84 the information concerning the to-be-processed terminal apparatus 14, which is, for example, the mobile information, such as the traveling speed and the azimuth, and the positional information.

The warning unit 84 receives the information sent from the terminal identifying unit 82. This information contains, for example, the turn-signal information and the brake information about the terminal apparatus 14 to be processed. The turn-signal information is information indicating that a turn signal lever is placed in a right or left turn position in the vehicle 12, in which the to-be-processed terminal apparatus 14 is installed. The brake information is information indicating that a brake pedal of the vehicle 12, in which the to-be-processed terminal apparatus 14 is installed, has been stepped in. The warning unit 84 processes these pieces of information and then outputs the processing result to the notification unit 70. One example of the processing result is a warning, which can preferably alert the driver. More specifically, the notification unit 70 notifies to the driver the traveling conditions of the vehicle carrying the to-be-processed terminal apparatus 14, which are the braking and left/right turn, for example, by using a buzzer.

Also, the warning unit 84 may give notification in response to the traveling conditions of the driver's own vehicle 12 and a vehicle 12 of the to-be-processed terminal apparatus 14. More specifically, if a distance D between the terminal apparatus 14 of the vehicle-in-front and the to-be-processed terminal apparatus 14 is less than a threshold value Ds, the warning unit 84 will output the processing result. Here, the threshold value Ds is derived as follows.

$$Ds = V/1800 \ [m]$$

V [m/h] is the traveling speed per hour of a vehicle 12 in which the terminal apparatus 14 of the vehicle-in-front is installed. If the driver's own vehicle 12 is traveling with D<Ds, the notification unit 70 will provide an audio output pronouncing, for example, "the driver of the vehicle ahead of the vehicle-in-front puts on the brake" and "the vehicle ahead of the vehicle-in-front makes a right (or left) turn". Also, the notification unit 70 may turn on the buzzer or have a lamp blink on the monitor.

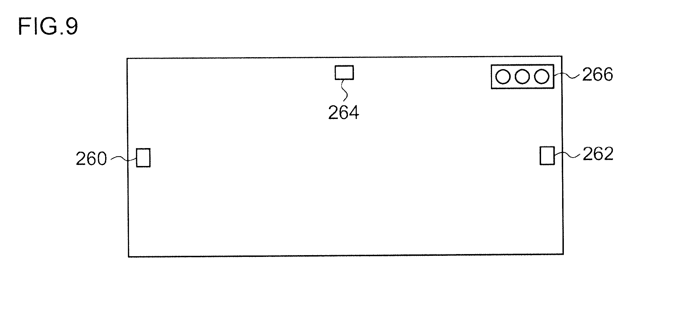

FIG. 9 shows a screen displayed on the notification unit 70. FIG. 9 explains the notification on the monitor. The monitor includes a left-turn notification region 260 for indicating a left turn of a vehicle ahead of the vehicle-in-front, a right-turn notification region 262 for indicating a right turn thereof, a vehicle stop notification region 264 for indicating a stop thereof, and a traffic signal notification region 266. If a left turn is indicated by the turn-signal information fed from the to-be-processed terminal apparatus 14, the left-turn notification region 260 will blink. If a right turn is indicated by the turn-signal information fed from the to-be-processed terminal apparatus 14, the right-turn notification region 262 will blink. If a brake-in-use is indicated by the brake information fed from the to-be-processed terminal apparatus 14, the vehicle stop notification region 264 will blink. If traffic signal information is contained in the packet signal sent from the terminal apparatus 14, a color according to a lighting color in the traffic signal information will blink in the traffic signal notification region 266. Note that all these regions 260 to 266 may light up instead of blink.

A description is now given of an example where the notification unit 70 gives a notification by activating the buzzer. If a brake-in-use is indicated by the brake information, the buzzer may give out a sound of "boo" (beep or like sound), for example. If a right turn is indicated by the turn-signal information, it may give out a "pong" sound, for example. If a left turn is indicated by the turn-signal information, it may give out a "pong-pong" sound, for example. If a green light color is indicated by the traffic signal information, an audio output pronouncing "the traffic signal is green" may be provided, for example. If, on the other hand, D≥Ds, the warning unit 84 will not output any warning to the notification unit 70. This is because, in this case, the distance between the terminal apparatus 14 of the vehicle-in-front and the to-be-processed terminal apparatus 14 is sufficiently kept. When the to-be-processed terminal apparatus 14 starts moving while the driver's own vehicle 12 is being stopped or not moving, the warning unit 84 outputs a warning to the notification unit 70. This prompts the driver to prepare for starting the vehicle 12.

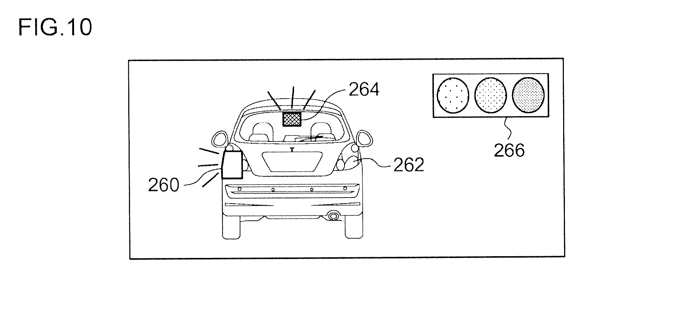

Also, the notification unit 70 may notify the traveling condition of the to-be-processed terminal 14 by displaying it on a display. For example, the display as used herein is preferably a head-up display (HUD). FIG. 10 shows another screen displayed on the notification unit 70. A rear-side image of a vehicle is shown in a center of a screen. On this screen, the left-turn notification region 260 for indicating the left turn of the vehicle ahead of the vehicle-in-front, the right-turn notification region 262 for indicating the right turn thereof and the vehicle stop notification region 264 for indicating the stop thereof are indicated in such a manner as to be superimposed on the rear-side image thereof. The traffic signal notification region 266 is also indicated on the screen. Note here that the size of the rear-side image thereof is fixed regardless of the distance between the terminal apparatus 14 of the vehicle-in-front and the to-be-processed terminal apparatus 14. Similar to the description in conjunction with FIG. 9, the left-turn notification region 260 to the traffic signal notification region 266 blink or light up.

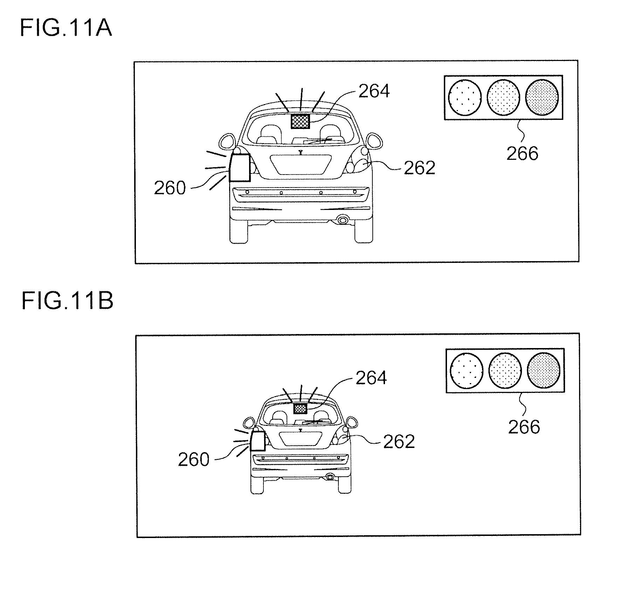

FIGS. 11A and 11B show still another screen displayed on the notification unit 70. Although the screens according to this example as shown in FIG. 11A and FIG. 11B are displayed similarly to the screen of FIG. 10, the size of the rear-side image shown in these screens varies depending on the distance between the terminal apparatus 14 of the vehicle-in-front and the to-be-processed terminal apparatus 14. FIG. 11A corresponds to a case where the distance between the terminal apparatus 14 of the vehicle-in-front and the to-be-processed terminal apparatus 14 is short. FIG. 11B corresponds to a case where the distance therebetween is long.

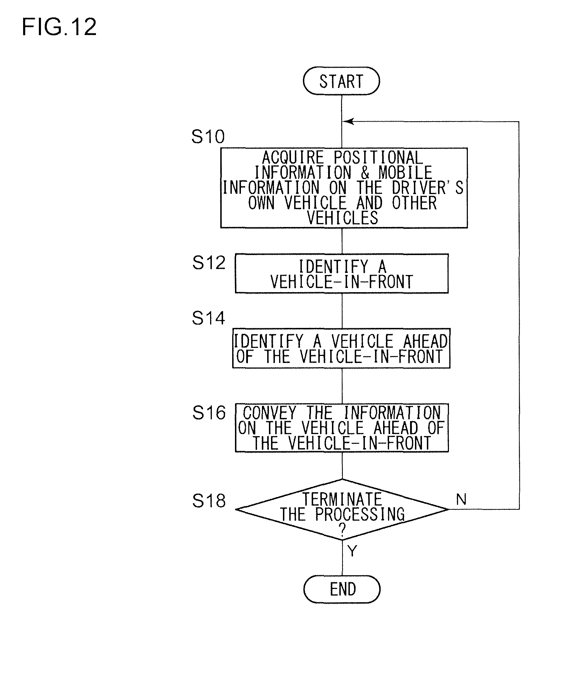

An operation of the communication system 100 configured as above is now explained. FIG. 12 is a flowchart showing a notification procedure by the terminal apparatus 14. The information acquiring unit 80 acquires the positional information and the mobile information on the driver's own vehicle 12 and other vehicles 12 (a vehicle-in-front and a vehicle ahead of the vehicle-in-front) (S10). The terminal identifying unit 82 identifies the vehicle-in-front (S12) and also identifies the vehicle ahead of the vehicle-in-front (S14). The warning unit 84 notifies the information on the vehicle ahead of the vehicle-in-front (S16). If the processing is not completed (N of S18), the procedure will return to Step S10 (S10). If the processing has been completed (Y of S18), the processing of this flow will be terminated.

By employing the first exemplary embodiment of the present invention, the packet signal sent from a to-be-processed terminal apparatus, which is located ahead of the terminal apparatus of the vehicle-in-front, is processed and notified. Thus, the traveling information sent from the to-be-processed terminal apparatus of a vehicle, which may possibly not be visually recognized by the driver, can be notified. Since the traveling information sent from the to-be-processed terminal apparatus of the vehicle, which may possibly not be visually recognized by the driver, is notified, the driver can grasp the traveling condition of a vehicle, in which the to-be-processed terminal apparatus is installed, in the event that this vehicle carrying the to-be-processed terminal is not visually recognizable. Since the traveling condition of the vehicle is grasped, the risk of a collision accident can be reduced. Since the brake-in-use and the right/left turn are notified as the traveling condition, the occurrence of a rear-end collision accident can be suppressed. The traveling condition of the vehicle ahead of the vehicle-in-front and the traffic signal information obtained by ITS are notified to the driver. Thus, safe and secure driving environment can be provided to the driver even though the driver's view is blocked by the vehicle-in-front. Since the notification is given when the distance is short, the information can be notified when the risk is high. Since no notification is given when the distance is long, the unnecessary notification can be omitted.

(Second Exemplary Embodiment)

Similar to the first exemplary embodiment, the second exemplary embodiment relates to a communication system that carries out not only the inter-vehicle communication but also the road-to-vehicle communication. Similar to the first exemplary embodiment, a terminal apparatus according to the second exemplary embodiment notifies the traveling condition of a vehicle traveling immediately ahead of a vehicle carrying the terminal apparatus of the vehicle-in-front. In the first exemplary embodiment, the traveling condition is notofied independently of the type of a vehicle, in which the terminal apparatus of the vehicle-in-front is installed. It is assumed, in the second exemplary embodiment, that a vehicle, in which the terminal apparatus of the vehicle-in-front is installed, is a large-sized vehicle. If the vehicle, in which the terminal apparatus of the vehicle-in-front is installed, is a standard-sized vehicle, there may be cases where the traveling condition of a vehicle ahead of the vehicle-in-front can be visually recognized through the windshield or side glass to some extent. If, on the other hand, the vehicle, in which the terminal apparatus of the vehicle-in-front is installed, is a large-sized vehicle, it will be difficult for the driver to check the traveling condition of the vehicle ahead of the vehicle-in-front or the lighting color of the traffic signal. The situation like this increases the chance of a rear-end collision accident and makes it difficult to carry out a risk prediction driving. If, on the other hand, the vehicle, in which the terminal apparatus of the vehicle-in-front is installed, is a standard-sized vehicle, there may be no need to notify the information about the vehicle ahead of the vehicle-in-front because, as described above, the driver can then directly see the vehicle ahead of the vehicle-in-front.

In order to cope with the situation like this, when the vehicle, in which the terminal apparatus of the vehicle-in-front is installed, is a large-sized vehicle, the terminal apparatus according to the second exemplary embodiment notifies the traveling condition of the vehicle ahead of the vehicle-in-front to the driver, in a similar manner to the first exemplary embodiment. In other words, whether or not the traveling condition of the vehicle ahead of the vehicle-in-front is to be notified to the driver is determined based on the type of the vehicle-in-front 12. Since the communication system 100, the base station apparatus 10 and the terminal apparatuses 14 according to the second exemplary embodiment are of similar types to those shown in FIG. 1, FIG. 2 and FIG. 4, a description is given here centering around different features.

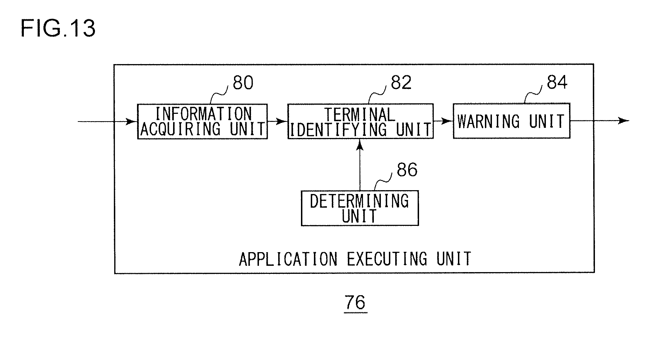

FIG. 13 shows a structure of an application executing unit 76 according to the second exemplary embodiment of the present invention. The application executing unit 76 includes an information acquiring unit 80, a terminal identifying unit 82, a warning unit 84, and a determining unit 86. Data, which are fed from the extraction unit 72 and then acquired by the information acquiring unit 80, contain the information on the vehicle type, too. This is said to be the type information regarding the type of a vehicle 12 carrying a terminal apparatus 14, which is the sender of the aforementioned data. Similar to the first exemplary embodiment, the terminal identifying unit 82 identifies a terminal apparatus 14 of the vehicle-in-front and a terminal apparatus 14 to be processed (a to-be-processed terminal 14).

The determining unit 86 acquires a vehicle type regarding the terminal apparatus 14 of the vehicle-in-front identified by the terminal identifying unit 82. The determining unit 86 checks to see if the vehicle type is a large-sized vehicle. Being a large-sized vehicle corresponds to being "large-sized passenger vehicle and medium-sized passenger vehicle (used exclusively for carrying passengers)" or "large motor truck and large-sized special motor vehicle" in Fig. 6. Note that other items in FIG. 6 may be regarded as the large-sized vehicle. The determining unit 86 outputs a determination result as to whether or the vehicle-in-front is a large-sized vehicle, to the terminal identifying unit 82. If the terminal identifying unit 82 has received from the determining unit 86 the determination result indicating that the vehicle-in-front is a large-sized vehicle, the terminal identifying unit 82 outputs to the warning unit 84 the information concerning the to-be-processed terminal apparatus 14, which is, for example, the mobile information, such as the traveling speed and the azimuth, and the positional information. If, on the other hand, the terminal identifying unit 82 has received from the determining unit 86 the determination result indicating that the vehicle-in-front is not a large-sized vehicle, the terminal identifying unit 82 outputs no information.

If the information has been received, the warning unit 84 operates similarly to the first exemplary embodiment. In other words, if the vehicle type, contained in the packet signal sent from the to-be-processed terminal 14, indicates a large-sized vehicle, the warning unit 84 will output the information on the to-be-processed terminal apparatus 14 to the notification unit 70. If, on the other hand, no information is received, the application executing unit 76 may output lane-departure information, a vehicle approach warning, a traffic congestion warning and the like to the notification unit 70.

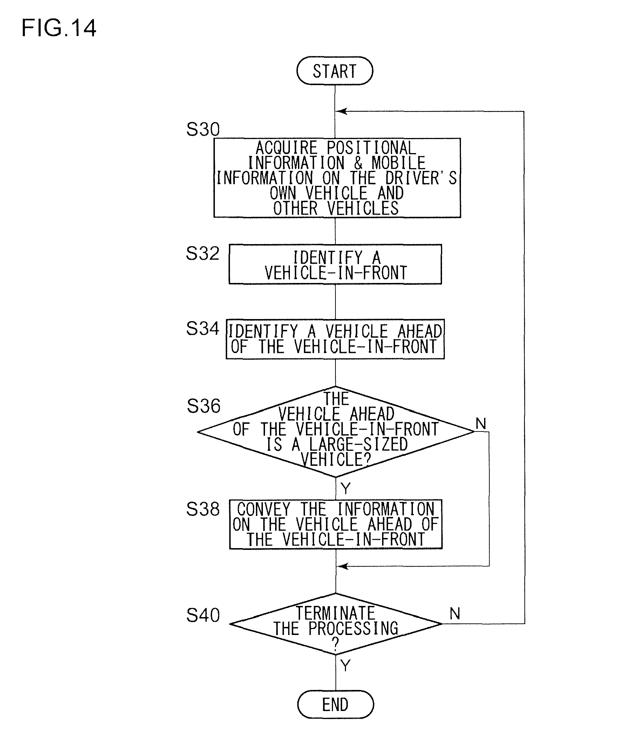

FIG. 14 is a flowchart showing a notification procedure by the application executing unit 76. The information acquiring unit 80 acquires the positional information and the mobile information on the driver's own vehicle 12 and other vehicles 12 (a vehicle-in-front and a vehicle ahead of the vehicle-in-front) (S30). The terminal identifying unit 82 identifies the vehicle-in-front (S32) and also identifies the vehicle ahead of the vehicle-in-front (S34). If it is determined by the determining unit 86 that vehicle-in-front is a large-sized vehicle (Y of S36), the warning unit 84 will notify the information on the vehicle ahead of the vehicle-in-front (S38). If it is determined by the determining unit 86 that vehicle-in-front is not a large-sized vehicle (N of S36), Step S38 (S38) will be skipped. If the processing is not completed (N of S40), the procedure will return to Step S30 (S30). If the processing has been completed (Y of S40), the processing of this flow will be terminated.

By employing the second exemplary embodiment of the present invention, the information on the vehicle ahead of the vehicle-in-front can be notified when the field of view in front of the driver's own vehicle is deteriorated by a large-sized vehicle. Since the notification is restricted when the field of view in front of the driver's own vehicle is deteriorated by a large-sized vehicle, the driver can recognize that risk may be imminent. If the vehicle-in-front is not a large-sized vehicle, the traveling condition will not be notified and therefore the amount of information notified to the driver can be reduced.

(Third Exemplary Embodiment)

Similar to the first and second exemplary embodiments, the third exemplary embodiment relates to a communication system that carries out not only the inter-vehicle communication but also the road-to-vehicle communication. In particular, the third exemplary embodiment relates to various patterns in the processing carried out by the warning unit 84 in the first exemplary embodiment or the second exemplary embodiment. Accordingly, the processing to be described in the third exemplary embodiment may preferably be combined arbitrarily with the processing in the first exemplary embodiment or the second exemplary embodiment. Since the communication system 100, the base station apparatus 10 and the terminal apparatuses 14 according to the third exemplary embodiment are of similar types to those shown in FIG. 1, FIG. 2 and FIG. 4, a description is given here centering around different features.

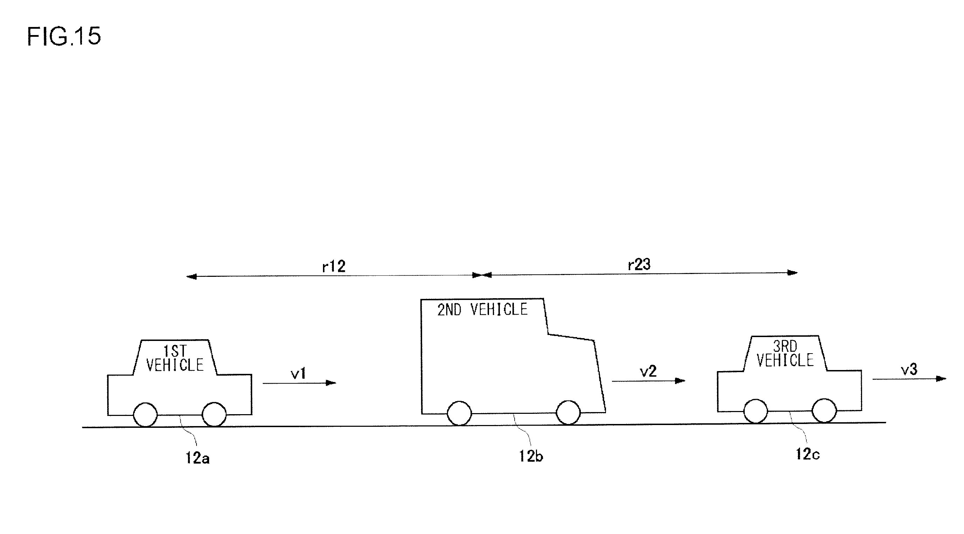

FIG. 15 is a brief summary of a processing carried out in the warning unit 84 according to the third exemplary embodiment of the present invention. Three vehicles 12 (first vehicle 12a, second vehicle 12b and third vehicle 12c) travel from left to right. Thus, the third vehicle 12c is followed by the second vehicle 12b, namely, the second vehicle 12b travels right behind the third vehicle 12c; the second vehicle 12b is followed by the first vehicle 12a, namely, the first vehicle 12a travels right behind the second vehicle 12b. A not-shown terminal apparatus 14 is installed in each of the vehicles 12. Here, the terminal apparatus 14 in the first vehicle 12a receives a packet signal and determines whether or not the traveling condition of the vehicle 12c ahead of the vehicle-in-front 12b is to be notified to the driver. For this reason, the warning unit 84 to be explained in the third exemplary embodiment is installed in the first vehicle 12a. Note that the vehicle-in-front corresponds to the second vehicle 12b, and the vehicle ahead of the vehicle-in-front corresponds to the third vehicle 12c. The warning unit 84 in the terminal apparatus 14 installed in the first vehicle 12a communicates with the terminal apparatuses 14 installed in the other vehicles 12 (the second vehicle 12b and the third vehicle 12c) and thereby acquires the positional information and the traveling speed of the other vehicles 12 (the second vehicle 12b and the third vehicle 12c). The warning unit 84 also acquires the positional information and the traveling speed of the first vehicle 12a, which is the driver's own vehicle. The warning unit 84 calculates the distance between the vehicles 12b and 12c and the driver's own vehicle 12a, based on the positional information.

In the case of FIG. 15, the warning unit 84 derives not only a distance r12 between the first vehicle 12a and the second vehicle 12b but also a distance r23 between the second vehicle 12b and the third vehicle 12c. The warning unit 84 also acquires a traveling speed v1 of the first vehicle 12a, a traveling speed v2 of the second vehicle 12b and a traveling speed v3 of the third vehicle 12c. Based on these pieces of information, the warning unit 84 carries out any of the following processings (1-1) to (2-3) so as to determine whether or not the notification is to be given.

(1) Determination based on the relationship between a vehicle-in-front and a vehicle ahead of the vehicle-in-front.

(1-1) The warning unit 84 determines whether or not the notification is to be given by comparing the distance r23 against a threshold value Rth. If, for example, r23<Rth, the warning unit 84 will determine that the notification be given. If otherwise, the warning unit 84 will determine that no notification be given. Here, the threshold value Rth for the distance is arbitrarily set.

(1-2) The warning unit 84 determines whether or not the notification is to be given, based on the distance r23 and the traveling speed v2. If, for example, r23<Rth and v2>vth, the warning unit 84 will determine that the notification be given. If r23<Rth and v2>(v3+vth), the warning unit 84 may determine that the notification be given. If any of the above conditions are not met, the warning unit 84 will determine that no notification be given. Here, the threshold value vth for the traveling speed is arbitrarily set.

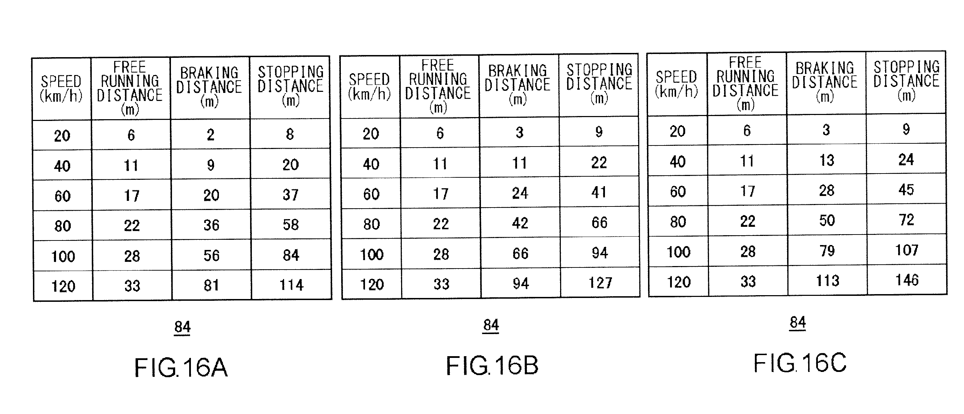

(1-3) The warning unit 84 determines whether or not the notification is to be given, based on a stopping distance of the vehicle-in-front and the distance r23. The warning unit 84 assesses the surface condition of a road, on which the vehicles are traveling, and the condition of tires through the communications between not-shown sensors and the terminal apparatuses 14. The warning unit 84 identifies the current state based on the assessed conditions. The current state is classified into, for example, a first dry state in which the road surface is dry (with no tire wear), a second dry state in which the road surface is dry (with tire wear), and a moist state in which the road surface is moist. Also, the warning unit 84 derives the stopping distance of the vehicle-in-front, based on the current state and the traveling speed v2. FIGS. 16A to 16C each shows a data structure of a table recorded in the warning unit 84 according to the third exemplary embodiment of the present invention. FIG. 16A shows a table to be used in the first dry state (with no tire wear). FIG. 16B shows a table to be used in the second dry state (with tire wear). FIG. 16C shows a table to be used in the moist state. Now refer back to FIG. 15. If r23<[the stopping distance], the warning unit 84 will determine that the notification be given. If otherwise, the warning unit 84 will determine that no notification be given.

(2) Determination based on the relationship between the driver's own vehicle and the vehicle-in-front.

(2-1) The warning unit 84 determines whether or not the notification is to be given by comparing the distance r12 against a threshold value Rth'. If, for example, r12<Rth', the warning unit 84 will determine that the notification be given. If otherwise, the warning unit 84 will determine that no notification be given. Here, the threshold value Rth' for the distance is arbitrarily set.

(2-2) The warning unit 84 determines whether or not the notification is to be given, based on the distance r12 and the traveling speed v1. If, for example, r12<Rth' and v1>vth', the warning unit 84 will determine that the notification be given. If r12<Rth' and v1>(v2+vth'), the warning unit 84 may determine that the notification be given. If any of the above conditions are not met, the warning unit 84 will determine that no notification be given. Here, the threshold value vth' for the traveling speed is arbitrarily set.

(2-3) The warning unit 84 determines whether or not the notification is to be given, based on the stopping distance of the driver's own vehicle and the distance r12. The stopping distance is derived as described above and therefore the repeated description is omitted here. If r12<[the stopping distance], the warning unit 84 will determine that the notification be given. If otherwise, the warning unit 84 will determine that no notification be given.

By employing the above-described modifications, various processings, by which whether or not the traveling condition of the vehicle ahead of the vehicle-in-front is to be notified to the driver is determined, are defined. Thus, a processing best suited to the situation can be carried out.

The present invention has been described based on the exemplary embodiments and their modifications. The exemplary embodiments are intended to be illustrative only, and it is understood by those skilled in the art that further various modifications to constituting elements and processes as well as arbitrary combinations thereof could be further developed and that such modifications are also within the scope of the present invention.

In the first and second exemplary embodiments, the terminal identifying unit 82 identifies, as the to-be-processed terminal 14, a terminal apparatus 14 installed in a vehicle 12, which travels immediately ahead of another vehicle 12 that carries its terminal apparatus 14 and travels in front of the driver's vehicle 12. However, this should not be considered as limiting and, for example, the terminal identifying unit 82 may identify the terminal apparatus 14 of the vehicle 12 traveling ahead of the terminal apparatus 14 of the vehicle-in-front, instead of identifying the terminal apparatus 14 of the vehicle-in-front. Also, the terminal identifying unit 82 may identify, as the to-be-processed terminal 14, a terminal apparatus 14 installed in a vehicle 12 traveling in front of the vehicle ahead of the vehicle-in-front. In other words, the terminal apparatus 14 of the latter case is a terminal apparatus of a vehicle traveling further ahead of another vehicle carrying the terminal apparatus of the former case. According to this modification, the applicable range of the present exemplary embodiments can be enlarged.

Also, the terminal identifying unit 82 may identify a plurality of terminal apparatuses 14 as the to-be-processed terminal apparatus 14. According to this modification, a plurality of vehicles 12, which are more likely to affect the traveling condition, can be recognized.

There are services available on a mobile terminal such as a smartphone. Such services are accessible when applications such as the music distribution, the in-store guiding and entertainment guides are utilized on the touch screen of an on-vehicle device. The terminal apparatuses in the first and second exemplary embodiments of the present invention may be provided as the application in the mobile terminal. According to this modification, the notification can be given by way of the smartphone placed on a dashboard.

In the first and second exemplary embodiments of the present invention, the terminal identifying unit 82 automatically identifies the terminal apparatus 14 of the vehicle-in-front. However, this should not be considered as limiting and, for example, the terminal apparatus 14 of the vehicle-in-front or the vehicle 12, in which the terminal apparatus 14 of the vehicle-in-front is installed, may be identified through an input entered by the driver. According to this modification, when the frontward view of the driver is deteriorated by a passenger vehicle-in-front with a film pasted on the rear window (instead of a large-sized vehicle traveling in front of the driver's own vehicle), the driver can manually specify the terminal apparatus 14 of the vehicle-in-front, for example.

One generic embodiment of the present invention is summarized as follows. A receiving apparatus according to one embodiment of the present invention includes: a receiving unit that receives a packet signal sent from a transmitting apparatus, the packet signal containing positional information and mobile information; a processing unit that processes a packet signal sent from a second transmitting apparatus installed in a second vehicle in front of a first transmitting apparatus of a first vehicle traveling in front of the receiving apparatus, based on the positional information and the mobile information contained in the packet signal received by the receiving unit; and an output unit that outputs a processing result in the processing unit.

According to this generic embodiment, the packet signal sent from the second transmitting apparatus ahead of the first transmitting apparatus of a vehicle traveling in front of the driver's own vehicle is processed and notified. Thus, the information sent from the second transmitting apparatus, which may possibly not be visually recognized by the driver, can be notified.

The packet signal received by the receiving unit may further contain type information on the type of a vehicle in which the transmitting apparatus is installed; when the type information contained in the packet signal sent from the first transmitting apparatus indicates a large-sized vehicle, the output unit may output the processing unit. In this case, the information can be notified when the field of view in front of the driver's own vehicle is deteriorated by a large-sized vehicle.

When the distance between the first transmitting apparatus and the second transmitting apparatus is less than a threshold value, the output unit may output the processing result. In this case, the notification is given when the distance is short, so that the information can be notified if risk is high.

DESCRIPTION OF THE REFERENCE NUMERALS

| | |
|---|---|
| 10 | Base station apparatus |
| 12 | Vehicle |
| 14 | Terminal apparatus |
| 20 | Antenna |
| 22 | RF unit |
| 24 | Modem unit |
| 26 | Processing unit |
| 28 | Control unit |
| 30 | Network communication unit |
| 32 | Frame specifying unit |
| 34 | Selector |
| 36 | Generator |
| 50 | Antenna |
| 52 | RF unit |

| 54 | Modem unit |
| 56 | Processing unit |
| 58 | Control unit |
| 60 | Timing specifying unit |
| 62 | Transfer decision unit |
| 64 | Acquiring unit |
| 66 | Generator |
| 70 | Notification unit |
| 72 | Extraction unit |
| 74 | Carrier sensing unit |
| 76 | Application executing unit |
| 80 | Information acquiring unit |
| 82 | Terminal identifying unit |
| 84 | Warning unit |
| 86 | Determining unit |
| 100 | Communication system |

INDUSTRIAL APPLICABILITY

The present invention can give a proper notification to enhance the safety of a driver even when the field of view in front of the driver's own vehicle is deteriorated by another vehicle.

**Claims**

1.   A receiving apparatus comprising:

a receiving unit that receives a packet signal sent from a transmitting apparatus, the packet signal containing positional information and mobile information;
a processing unit that processes a packet signal sent from a second transmitting apparatus installed in a second vehicle in front of a first transmitting apparatus of a first vehicle traveling in front of the receiving apparatus, based on the positional information and the mobile information contained in the packet signal received by the receiving unit; and
an output unit that outputs a processing result in the processing unit.

2.   A receiving apparatus according to claim 1, wherein the packet signal received by the receiving unit further contains type information on a type of a vehicle in which the transmitting apparatus is installed, and wherein, when the type information contained in the packet signal sent from the first transmitting apparatus indicates a large-sized vehicle, the output unit outputs the processing unit.

3.   A receiving apparatus according to claim 1 or claim 2, wherein, when a distance between the first transmitting apparatus and the second transmitting apparatus is less than a threshold value, the output unit outputs the processing result.

FIG.1

100

FIG.2

EP 2 902 985 A1

EP 2 902 985 A1

FIG.3A

| 1ST SUBFRAME | 2ND SUBFRAME | 3RD SUBFRAME | ⸨ | N-TH SUBFRAME |
|---|---|---|---|---|

FIG.3B

| ROAD-TO-VEHICLE TRANS-MISSION PERIOD | INTER-VEHICLE TRANSMISSION PERIOD | INTER-VEHICLE TRANSMISSION PERIOD | INTER-VEHICLE TRANSMISSION PERIOD | ⸨ | INTER-VEHICLE TRANSMISSION PERIOD |
|---|---|---|---|---|---|

FIG.3C

| INTER-VEHICLE TRANSMISSION PERIOD | ROAD-TO-VEHICLE TRANS-MISSION PERIOD | INTER-VEHICLE TRANSMISSION PERIOD | INTER-VEHICLE TRANSMISSION PERIOD | ⸨ | INTER-VEHICLE TRANSMISSION PERIOD |
|---|---|---|---|---|---|

FIG.3D

| INTER-VEHICLE TRANSMISSION PERIOD | INTER-VEHICLE TRANSMISSION PERIOD | ROAD-TO-VEHICLE TRANS-MISSION PERIOD | INTER-VEHICLE TRANSMISSION PERIOD | ⸨ | INTER-VEHICLE TRANSMISSION PERIOD |
|---|---|---|---|---|---|

FIG.4

Terminal Apparatus (14) block diagram:

- 50 — antenna
- 52 — RF UNIT
- 54 — MODEM UNIT
- 56 — PROCESSING UNIT
- 58 — CONTROL UNIT
- 64 — ACQUIRING UNIT
- 76 — APPLICATION EXECUTING UNIT
- 70 — NOTIFICATION UNIT
- 66 — GENERATOR
- 62 — TRANSFER DECISION UNIT
- 60 — EXTRACTION UNIT
- 72 — EXTRACTION UNIT
- 74 — CARRIER SENSING TIMING IDENTIFYING UNIT

TERMINAL APPARATUS
14

FIG.5

| FUNCTIONAL UNIT | EXAMPLES OF DATA ELEMENTS |
|---|---|
| DATA CONTROL/ MANAGEMENT INFORMATION | VEHICLE ID |
| | VEHICLE CLASSIFICATION |
| POSITIONAL INFORMATION | |
| VEHICLE CONDITION INFORMATION | TRAVELING SPEED |
| | DIRECTION |
| | WINKER SW |
| OTHER VEHICLE INFORMATION | STEERING ANGLE |
| TIME INFORMATION | |
| INTERSECTION INFORMATION | |
| ROAD SEGMENT INFORMATION | |
| PARTICULAR VEHICLE INFORMATION | PARTICULAR VEHICLE ATTENTION |
| PRESERVED DOMAIN | |
| INDEPENDENT DOMAIN | |

FIG.6

| TYPE | VALUES |
|---|---|
| LARGE-SIZED PASSENGER VEHICLE AND MEDIUM-SIZED PASSENGER VEHICLE<br>(USED EXCLUSIVE FOR CARRYING PASSENGERS) | 0000 |
| LARGE MOTOR TRUCK AND LARGE-SIZED SPECIAL MOTOR VEHICLE | 0001 |
| ORDINARY-SIZED MOTOR TRUCK AND MEDIUM-SIZED MOTOR TRUCK | 0010 |
| SPECIAL MOTOR VEHICLE | 0011 |
| ORDINARY VEHICLE (EXCEPT FOR TRUCKS CLASSIFIED INTO THE CATEGORY OF ORDINARY VEHICLES) | 0100 |
| MOTORCYCLE | 0101 |
| TYPE II MOTORIZED BICYCLE | 0110 |
| TYPE I MOTORIZED BICYCLE | 0111 |
| BICYCLE | 1001 |
| LIGHT VEHICLE OTHER THAN BICYCLES | 1010 |
| PEDESTRIAN | 1000 |
| STREETCAR | 1011 |
| OTHERS | 1111 |

FIG.7

```
        ┌──────────────────────────────────────────────────────────────┐
        │        ╭80              ╭82                ╭84                 │
        │  ┌──────────────┐  ┌──────────────────┐  ┌──────────────┐     │
   ────────▶│ INFORMATION  │─▶│     TERMINAL     │─▶│ WARNING UNIT │────────▶
        │  │ACQUIRING UNIT│  │IDENTIFYING UNIT  │  │              │     │
        │  └──────────────┘  └──────────────────┘  └──────────────┘     │
        │             APPLICATION EXECUTING UNIT                        │
        └──────────────────────────────────────────────────────────────┘
                                76
```

FIG.8

FIG.9

FIG.10

FIG.11A

FIG.11B

FIG.12

```
                    ( START )
                         |
S10                      |
        ┌────────────────────────────────┐
        │      ACQUIRE POSITIONAL         │
        │    INFORMATION & MOBILE         │
        │ INFORMATION ON THE DRIVER'S     │
        │    OWN VEHICLE AND OTHER        │
        │          VEHICLES               │
        └────────────────────────────────┘
                         |
S12     ┌────────────────────────────────┐
        │         IDENTIFY A              │
        │     VEHICLE-IN-FRONT            │
        └────────────────────────────────┘
                         |
S14     ┌────────────────────────────────┐
        │ IDENTIFY A VEHICLE AHEAD        │
        │ OF THE VEHICLE-IN-FRONT         │
        └────────────────────────────────┘
                         |
S16     ┌────────────────────────────────┐
        │ CONVEY THE INFORMATION          │
        │ ON THE VEHICLE AHEAD OF         │
        │ THE VEHICLE-IN-FRONT            │
        └────────────────────────────────┘
                         |
S18        <  TERMINATE         >   N
           <  THE PROCESSING    >──────┐
              <     ?     >            │
                    | Y               │
                ( END )
```

FIG.13

```
                      ╭80              ╭82              ╭84
          ┌─────────────────┐ ┌─────────────────┐ ┌─────────────┐
─────────▶│  INFORMATION    │▶│    TERMINAL     │▶│WARNING UNIT │────────▶
          │ACQUIRING UNIT   │ │IDENTIFYING UNIT │ │             │
          └─────────────────┘ └─────────────────┘ └─────────────┘
                                       ▲
                                       │  ╭86
                              ┌─────────────────┐
                              │  DETERMINING    │
                              │     UNIT        │
                              └─────────────────┘

                   APPLICATION EXECUTING UNIT
```

76

FIG.14

```
                    ( START )
                         │
                         │◄──────────────┐
          S30 ┌──────────────────────┐   │
              │   ACQUIRE POSITIONAL  │   │
              │   INFORMATION & MOBILE│   │
              │INFORMATION ON THE DRIVER'S│
              │    OWN VEHICLE AND    │   │
              │    OTHER VEHICLES     │   │
              └──────────────────────┘   │
                         │                │
          S32 ┌──────────────────────┐   │
              │      IDENTIFY A       │   │
              │   VEHICLE-IN-FRONT    │   │
              └──────────────────────┘   │
                         │                │
          S34 ┌──────────────────────┐   │
              │ IDENTIFY A VEHICLE AHEAD│ │
              │ OF THE VEHICLE-IN-FRONT│  │
              └──────────────────────┘   │
                         │                │
                        THE               │
          S36      VEHICLE AHEAD          │
              ◄ OF THE VEHICLE-IN-FRONT ► N
                  IS A LARGE-SIZED   │    │
                      VEHICLE?       │    │
                         │ Y         │    │
          S38 ┌──────────────────────┐   │
              │ CONVEY THE INFORMATION│   │
              │ON THE VEHICLE AHEAD OF│   │
              │  THE VEHICLE-IN-FRONT │   │
              └──────────────────────┘   │
                         │◄───────────────┘
                         │
          S40       TERMINATE         N
              ◄  THE PROCESSING  ►────────┘
                      ?
                         │ Y
                    ( END )
```

FIG.15

3RD VEHICLE

12c

v3

r23

2ND VEHICLE

12b

v2

r12

1ST VEHICLE

12a

v1

| SPEED (km/h) | FREE RUNNING DISTANCE (m) | BRAKING DISTANCE (m) | STOPPING DISTANCE (m) |
|---|---|---|---|
| 20 | 6 | 2 | 8 |
| 40 | 11 | 9 | 20 |
| 60 | 17 | 20 | 37 |
| 80 | 22 | 36 | 58 |
| 100 | 28 | 56 | 84 |
| 120 | 33 | 81 | 114 |

84

FIG.16A

| SPEED (km/h) | FREE RUNNING DISTANCE (m) | BRAKING DISTANCE (m) | STOPPING DISTANCE (m) |
|---|---|---|---|
| 20 | 6 | 3 | 9 |
| 40 | 11 | 11 | 22 |
| 60 | 17 | 24 | 41 |
| 80 | 22 | 42 | 66 |
| 100 | 28 | 66 | 94 |
| 120 | 33 | 94 | 127 |

84

FIG.16B

| SPEED (km/h) | FREE RUNNING DISTANCE (m) | BRAKING DISTANCE (m) | STOPPING DISTANCE (m) |
|---|---|---|---|
| 20 | 6 | 3 | 9 |
| 40 | 11 | 13 | 24 |
| 60 | 17 | 28 | 45 |
| 80 | 22 | 50 | 72 |
| 100 | 28 | 79 | 107 |
| 120 | 33 | 113 | 146 |

84

FIG.16C

## INTERNATIONAL SEARCH REPORT

| International application No. |
| --- |
| PCT/JP2013/005567 |

### A. CLASSIFICATION OF SUBJECT MATTER
*G08G1/09*(2006.01)i, *B60R21/00*(2006.01)i, *G08G1/16*(2006.01)i

According to International Patent Classification (IPC) or to both national classification and IPC

### B. FIELDS SEARCHED

Minimum documentation searched (classification system followed by classification symbols)
G08G1/09, B60R21/00, G08G1/16

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2007-164328 A (Matsushita Electric Industrial Co., Ltd.), 28 June 2007 (28.06.2007), paragraphs [0002], [0030] to [0034], [0070] to [0079]; all drawings (Family: none) | 1-3 |
| Y | JP 2006-31328 A (Toyota InfoTechnology Center, Co., Ltd.), 02 February 2006 (02.02.2006), paragraphs [0034] to [0036]; fig. 4 (Family: none) | 1-3 |

☒ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31 October, 2013 (31.10.13) | 12 November, 2013 (12.11.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## INTERNATIONAL SEARCH REPORT

| | International application No. |
|---|---|
| | PCT/JP2013/005567 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-108110 A  (Sanyo Electric Co., Ltd.),<br>02 June 2011 (02.06.2011),<br>paragraphs [0014] to [0017], [0023], [0030];<br>all drawings<br>(Family: none) | 1-3 |
| Y | JP 2010-257320 A  (Sanyo Electric Co., Ltd.),<br>11 November 2010 (11.11.2010),<br>paragraphs [0010] to [0013]; all drawings<br>(Family: none) | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009252092 A

- JP 2009276991 A